Europäisches Patentamt

European Patent Office

Office européen des brevets

(11) Numéro de publication : **0 152 710 B2**

# (12) NOUVEAU FASCICULE DE BREVET EUROPEEN

(45) Date de publication du nouveau fascicule du brevet : **25.11.92 Bulletin 92/48**

(51) Int. Cl.⁵ : **B32B 15/00, B65D 65/40**

(21) Numéro de dépôt : **84402453.9**

(22) Date de dépôt : **30.11.84**

(54) **Matériau souple en feuille pour l'emballage et le surbouchage.**

(30) Priorité : **26.12.83 FR 8320758**

(43) Date de publication de la demande :
**28.08.85 Bulletin 85/35**

(45) Mention de la délivrance du brevet :
**07.02.90 Bulletin 90/06**

(45) Mention de la décision concernant
l'opposition :
**25.11.92 Bulletin 92/48**

(84) Etats contractants désignés :
**AT BE CH DE GB IT LI LU NL SE**

(56) Documents cités :
**DE-A- 2 645 690**
**FR-A- 2 149 784**
**FR-A- 2 528 012**
**GB-A- 991 568**
**GB-A- 1 405 391**
**US-A- 3 382 136**

(56) Documents cités :
**US-A- 3 462 342**
**US-A- 3 960 793**
**US-A- 3 982 051**
**US-A- 4 048 376**
**US-A- 4 279 659**
**W. Dörrscheidt et al, Polyolefine, Kunststoffe 66 (1976), 10, Seiten 567-574**
**Dr. K. Stoeckhert, Kunststoff-Lexikon, Carl Hansen Verlag, München, Wien, 7. Aufl., 1981, p. 47**

(73) Titulaire : **SOCIETE ALSACIENNE D'ALUMINIUM**
**Le Chable Beaumont**
**F-74160 Saint Julien en Genevois (FR)**

(72) Inventeur : **Bernhard, Marcel**
**1, rue Lazare Schurer**
**F-67600 Selestat (FR)**

(74) Mandataire : **Lemoine, Robert et al**
**Cabinet Malémont 42, Avenue du Président Wilson**
**F-75116 Paris (FR)**

EP 0 152 710 B2

## Description

La présente invention concerne un matériau souple en feuille pour l'emballage et le surbouchage, pour la réalisation de coiffes de bouteilles de champagne ou de mousseux, de capsules de bouteilles de vin et d'emballages de produits alimentaires, comprenant une couche intermediaire de matière synthétique disposée entre deux feuilles minces d'aluminium.

Les matériaux utilisés actuellement pour l'emballage et surbouchage ne donnent pas entière satisfaction. En effet, leur couche intermédiaire, constitué généralement par du polyéthylène, présente une certaine élasticité de sorte qu'après leur plissage sur les bouteilles ou sur les produits à emballer, les plis formés ont tendance à s'ouvrir, ce qui affecte l'esthétique du produit et risque en outre de réduire la durée de conservation du contenu de celui-ci. De même, les empreintes ou les déformations qui sont réalisées pour faciliter le dépliage ou amérioler l'esthétique, ont tendance à disparaître dans le temps. D'autre part, lorsque ces matériaux sont pourvus d'une bandelette ou d'un fil d'arrachage, leur déchirure n'est ni franche ni régulière et nécessite une force relativement intense.

US-A-3 462 342 décrit une composition adhésive comprenant une résine organique synthétique et un agent plastifiant pouvant être du polypropylène amorphe.

Cette composition est activable à l'eau et peut être utilisée de manière satisfaisante pour solidariser des matériaux perméables, lesquels permettent l'évacuation de l'eau nécessaire à son activation. En revanche, lorsqu'elle est utilisée pour solidariser des matériaux imperméables, et notamment des feuilles d'aluminium, elle assure une liaison peu résistance puisque l'eau nécessaire à son activation ne peut s'évacuer.

La présente invention se propose de remédier aux inconvénients décrits ci-dessus et, pour ce faire, elle a pour objet un matériau du type susmentionné qui se caractérise en ce que la couche intermédiaire est constituée d'une composition contenant du polypropylène amorphe, de 0 à 80 % en poids d'une cire microcristalline molle et de 0 à 25 % en poids d'un terpolymère: Ethylène - Acide acrylique - Ester d'acide acrylique, de manière à rendre le matériau souple malléable et inerte.

Le matériau conforme à l'invention est un complexe inerte dont l'aspect et la main se rapprochent du coûteux alliage étain-plomb que l'on utilise actuellement pour former les capsules et les coiffes de surbouchage. Il présente en outre une remarquable malléabilité, ce qui facilite sa mise en forme et lui permet de rester parfaitement plaqué contre le produit sur lequel il a été plié ou plissé. Par ailleurs, le pouvoir adhésif de sa couche intermédiaire vis-à-vis des feuilles minces d'aluminium est nettement supérieur à celui du polyéthylène, ce qui lui confère une excellente résistance. D'autre part, lorsqu'on souhaite l'arracher, sa déchirure est nette et franche et donc esthétique. De plus, il a un aspect régulier car, contrairement au matériau contenant du polyéthylène, il ne renferme pas de bulles.

Les essais effectués en laboratoire ont montré qu'il était souhaitable que la cire microcristalline utilisée ait un point de fusion compris entre 72 et 80°C et que sa teneur dans la composition soit de 0 à 80 en poids.

Ils ont également montré qu'il était préférable que l'ester soit un ester d'alkyle en $C_1$ - $C_5$ d'acide acrylique et que la teneur du terpolymère dans la composition soit de 0 à 25 % en poids.

La composition constituant la couche intermédiaire du matériau souple conforme à l'invention présente un point de ramollissement compris entre 80 et 150°C et une viscosité ente 8 et 60 pascals par seconde à 190°C. Ces caractéristiques peuvent toutefois être modifiées en ajoutant à la composition des charges telles que du talc, du kaolin, du calcaire, de la silice, du bioxyde de titane, etc...

Pour être complet, on précisera que les feuilles minces d'aluminium (formées en fait d'aluminium ou d'alliages d'aluminium) peuvent avoir une épaisseur d'au moins 7 micromètres et que la couche intermédiaire peut quant à elle avoir une épaisseur comprise entre 20 et 40 $g/m^2$.

On notera enfin que cette couche intermédiaire peut être déposée de façon classique à l'état fondu, par exemple par enduction au moyen de rouleaux, par extrusion sandwich au moyen de filières conventionnelles, plates ou boudineuses, etc...

## Revendications

1. Matériau souple en feuille pour l'emballage et le surbouchage, pour la réalisation de coiffes de bouteilles de champagne ou de mousseux, de capsules de bouteilles de vin et d'emballages de produits alimentaires, comprenant une couche intermédiaire de matière synthétique disposée entre deux feuilles minces d'aluminium, caractérisé en ce que la couche intermédiaire est constituée d'une composition contenant du polypropylène amorphe, de 0 à 80 % en poids d'une cire microcristalline molle et de 0 à 25 % en poids d'un terpolymère: Ethylène - Acide acrylique - Ester d'acide acrylique, de manière à rendre le matériau souple malléable et inerte.

2. Matériau souple selon la revendication 1, caractérisé en ce que la cire microcristalline molle a un point de fusion compris entre 72 et 80°C.

3. Matériau souple selon la revendication 1 ou 2, caractérisé en ce que l'ester d'acide acrylique est un ester d'alkyle en $C_1$ - $C_5$ d'acide acrylique.

## Claims

1. A flexible sheet material for packaging and over-closure, for making caps for champagne or sparkling wine bottles, closures for wine bottles and wrappings for food products, comprising an intermediaire layer of synthetic material disposed between two thin aluminium foils, characterized in that the intermediate layer comprises a composition containing amorphous polypropylene, from Ø to 8Ø% by weight of a soft microcrytalline wax and from Ø to 25% by weight of a terpolymer : Ethylene - Acrylic acid - Acrylic acid ester, in order to make the flexible material malleable and inert.

2. The flexible material according to claim 1, characterized in that the soft microcrystalline was has a melting point between 72 and 8Ø°C.

3. The flexible material according to claim 1 or 2, characterized in that the acrylic acid ester is a $C_1$ - $C_5$ alkyl ester of acrylic acid.

## Patentansprüche

1. Biegsames Folienmaterial zum Verspacken und Überschliessen, zur Herstellung von Kapseln für Champagner- oder Sektflaschen, Verschlüssen für Weinflaschen und Verpackungen für Nahrungsmittel, mit einer zwischen zwei dünnen Aluminiumfolien angeordneten Zwischenschicht aus Kunststoffmaterial, dadurch gekennzeichnet, dass die Zwischenschicht aus einer Zusammensetzung besteht, die amorphes Polypropylen, von 0 bis 80 Gewichtsprozent weiches mikrokristallines Wachs und von 0 bis 25 Gewichtzprozent Terpolymer: Äthylen - Acrylsäure - Acrylsäureester enthält, so dass das biegsame Material verformbar und inert ist.

2. Biegsames Material nach Anspruch 1, dadurch gekennzeichnet, dass der Schmelzpunkt für das weiche mikrokristalline Wachs von 72 bis 80°C beträgt.

3. Biegsames Material nach Anspruch 1 oder 2, dadurch gekennzeichnet, dass der Akrylsäureester ein $C_1$ - $C_5$ Alkylester von Akrylsäure ist.